# EUROPÄISCHE PATENTSCHRIFT

(11) **EP 2 705 557 B1**
(45) Veröffentlichungstag und Bekanntmachung des Hinweises auf die Patenterteilung: **28.09.2016**
(21) Anmeldenummer: 12724579.3
(22) Anmeldetag: 24.04.2012
(51) Int. Cl.: H01M 2/26, H01M 2/36, H01M 10/0587, H01M 10/60, H01M 10/052, H01M 10/6567, H01M 10/643, H01M 10/613, H01M 10/654

(54) **LITHIUMSEKUNDÄRZELLENANORDNUNG**
LITHIUM SECONDARY CELL ARRAY
ENSEMBLE DE CELLULES SECONDAIRES AU LITHIUM

(30) Priorität: 06.05.2011 DE 102011100730; 20.06.2011 DE 102011105040
(43) Veröffentlichungstag der Anmeldung: 12.03.2014
(73) Patentinhaber: Ebert, Klaus, 13591 Berlin (DE); Meyer, Stefan, 13591 Berlin (DE); Resche, Eberhard, 09217 Burgstädt (DE)
(72) Erfinder: Ebert, Klaus, 13591 Berlin (DE); Meyer, Stefan, 13591 Berlin (DE); Resche, Eberhard, 09217 Burgstädt (DE)
(74) Vertreter: Kruspig, Volkmar
(86) Internationale Anmeldenummer: PCT/EP2012/057423
(87) Internationale Veröffentlichungsnummer: WO 2012/152570

(56) Entgegenhaltungen:
- WO-A2-2004/075320
- WO-A2-2009/048303
- DE-A1-102007 032 520

## Beschreibung

Die Erfindung betrifft eine Lithiumsekundärzellenanordnung in zylindrischer Bauform mit einem Wickeldorn und einem Wickelpaket, welches folienartige, beschichtete Streifen sowie Kontaktierungsstreifen, die die elektrische Zellenstruktur aus Anode, Kathode und Separator bilden, aufweist, und mit äußeren elektrischen Anschlussmitteln, diese umfassend Polkappen, gemäß Patentanspruch 1.

Aus der DE 696 36 796 T2 ist eine zylindrische Sekundärbatterie mit Polkappen vorbekannt, wobei die Kontaktierung derartig ausgebildet ist, dass die entsprechenden Folien des Wickels streifenartig nach außen geführt werden. Dabei ist entweder eine Vielzahl solcher Streifen zu handhaben, was zu mechanischen Problemen wie Stauchungen oder Materialbrüchen führen kann, oder es erfolgt eine Beschränkung auf wenige Streifen, die aus dem Folienwickel herausgeführt werden, was allerdings die Stromtragfähigkeit reduziert.

Aus der DE 699 00 105 T2 ist eine Sekundärbatterie mit nichtwässrigem Elektrolyten in Form einer Wickelanordnung vorbekannt. Dort ist eine längserstreckte positive und negative Elektrode mit einem Separator in der Weise laminiert, dass die positive Elektrode eine äußere Schicht bildet.

Bei der DE 699 13 570 T2 ist die dort gezeigte Lithiumsekundärzelle als gerollter Zylinder ausgeführt. Weiterhin sind Anschlussbaugruppen vorhanden, die durch eine Vielzahl von Elektrodenflachsteckern kontaktiert werden, wodurch die durch die aufgenommene Elektrodeneinheit erzeugte elektrische Energie an eine externe Einrichtung geliefert werden kann. Darüber hinaus ist ein Deckel der Gesamtanordnung mit einem Gasentlüftungsstopfen versehen. Die zur Kontaktierung benutzten Elektrodenflachstecker, die in gewissen Abständen innerhalb des Wickels für die gewünschte Kontaktierung sorgen, gestatten jedoch nur die Verwendung eines geringen Teils des Materialquerschnitts für den eigentlichen Stromtransport. Damit ist sowohl der Strom beim Laden einer entsprechenden Lithiumsekundärzelle als auch beim Entladen begrenzt.

Die gattungsbildende DE 10 2007 000 428 A1 geht von einem Wickeldorn einer Lithium-Ionen-Zelle aus. Auf dem Wickeldorn befindet sich ein Trilaminat aus Anode, Separator und Kathode. Weiterhin sind sogenannte Polstöpsel vorhanden, wobei das Trilaminat um den Wickeldorn gewickelt ist, so dass der gewünschte Wickel entsteht und wobei weiterhin die Polstöpsel in die Enden des Wickeldorns eingesetzt werden. Der Durchmesser des Kopfes des Polstöpsels nach DE 10 2007 000 428 A1 ist kleiner als der Durchmesser des Wickels. In einer Ausführungsform wird vor dem Befestigen des Polstöpsels an den Wickeldorn eine Unterlegscheibe aufgelegt, die sich dann zwischen dem Wickel und dem Polstöpsel befindet. Diese Unterlegscheibe hat einen Durchmesser, der bis zu dem maximalen Durchmesser des Wickels reicht, und ist aus einem Material der entsprechenden Pole, z.B. Kupfer für die Anodenseite oder Aluminium für die Kathodenseite gefertigt. Die Unterlegscheibe kann bei einer weiterbildenden Ausführungsform als Stern, Kreuz oder Speiche realisiert werden. Hierdurch soll eine rüttelfeste Fixierung des Polkontakts möglich werden. Die Kontaktierung der Unterlegscheibe mit dem Folienwickel erfolgt durch Verschweißen, was einen sehr aufwendigen technologischen Schritt darstellt.

Zum Stand der Technik hinsichtlich Sekundärbatterien mit nichtwässrigem Elektrolyten sei noch auf die DE 698 29 544 T2 und bezüglich einem Verfahren zur Werkstoffrückgewinnung von Lithiumzellen auf die DE 694 20 438 T2 verwiesen.

Bei dem stapelbaren Energiespeicher auf der Basis von Lithium-Polymer-Zellen nach DE 10 2007 032 520 A1 ist eine Kühlungsbelüftung vorgesehen. Das Durchleiten der Kühlluft erfolgt über einen röhrenartigen Wickeldorn. Dort vorhandene Polkappen sind als mit einem Gewinde versehene Röhren ausgeführt, die in den unteren und oberen Teil des Wickeldorns eingeschraubt werden. Über die Polkappen wird die Kühlungsbelüftung vorgenommen.

Aus dem Vorgenannten ist es Aufgabe der Erfindung, eine weiterentwickelte Lithiumsekundärzellenanordnung in zylinderischer Bauform anzugeben, welche einen Wickeldorn und ein Wickelpaket aufweist, wobei letzteres folienartige beschichtete Streifen sowie Kontaktierungsstreifen umfasst, die die elektrische Zellenstruktur aus Anode, Kathode und Separator bilden. Die anzugebende Lithiumsekundärzellenanordnung soll hochstromfähig ausgeführt werden, wobei eine Kopplung mehrerer Zellen über eine entsprechende Reihenschaltung zu realisieren ist. Gleichzeitig soll eine Möglichkeit bestehen, die entsprechenden Zellen intensiv mit einfachen Mitteln zu kühlen, so dass Ladevorgänge verkürzbar sind.

Die Lösung der Aufgabe der Erfindung erfolgt mit der Merkmalskombination gemäß der Lehre nach Patentanspruch 1, wobei die Unteransprüche mindestens zweckmäßige Ausgestaltungen und Weiterbildungen umfassen.

Es wird demnach von einer Lithiumsekundärzellenanordnung in zylindrischer Bauform mit einem Wickeldorn und einem Wickelpaket ausgegangen, wobei das Wickelpaket folienartige, beschichtete Streifen sowie Kontaktierungsstreifen umfasst, die die elektrische Zellenstruktur aus Anode, Kathode und Separator bilden. Weiterhin sind elektrische Anschlussmittel vorhanden, welche Polkappen besitzen.

Der Wickeldorn besteht aus einem isolierenden Material, insbesondere einem keramischen Material, wobei der Wickeldorn einen sich in Längsrichtung erstreckenden Durchgangskanal, z.B. ausgeführt als Durchgangsbohrung, aufweist.

Der Wickeldorn steht endseitig mit je einer inneren Polkappe in Verbindung, welche ebenfalls jeweils einen Durchgangskanal aufweist.

Darüber hinaus ist jeweils eine äußere Polkappe mit Durchgangsöffnung vorgesehen, welche das Wickelpaket mindestens im Randbereich umfangsseitig umgreift. Hierbei ist diese äußere Polkappe im Sinne eines Spannrings oder eines Spannkranzes ausgeführt.

Erfindungsgemäß erfolgt über ein oder mehrere radial angeordnete kraftschlüssige Verbindungsmittel, welche jeweils zwischen der äußeren und der inneren Polkappe wirken, ein Fixieren des Wickelpakets und eine elektrische Kontaktierung zwischen den Kontaktstreifen und der äußeren Polkappe.

Über die quasi mechanische Reihenschaltung der Durchgangskanäle und der Durchgangsöffnungen kann der Lithiumsekundärzellenanordnung ein Zellen-Kühlliquid in einfacher Weise zugeführt werden. Dabei kann entstehende Wärme aus dem Wickelkern abgeführt werden und hierdurch eine wirksame Kühlung erfolgen.

Die Gesamtanordnung ist von einem rohrartigen, isolierenden Außengehäuse umgeben, welches bei einer Ausführungsform eine Ventilanordnung aufnimmt, um Elektrolytflüssigkeit zu erneuern bzw. entsprechende Flüssigkeit zuzuführen.

Bei einer bevorzugten Ausführungsform ist der Wickeldorn als Hohlzylinder, insbesondere keramischer Hohlzylinder ausgebildet, dessen Enden einen Abschnitt der jeweiligen inneren Polkappe aufnehmen. Dabei kann die innere Polkappe einen Durchmesser-reduzierten Bereich umfassen, der auf den Innendurchmesser des Hohlzylinders abgestimmt ist, um eine Befestigung der inneren Polkappe z.B. durch Stoffschluss, insbesondere Verkleben zu bewirken.

Die kraftschlüssigen Verbindungsmittel können als Schrauben oder Bolzen ausgeführt werden, welche den Wickel an dort vorgesehenen Ausnehmungen in radialer Richtung durchdringen, wobei die inneren Enden der Schrauben oder Bolzen von einer jeweiligen Gewindebohrung in der jeweiligen inneren Polkappe aufgenommen sind.

Bei einer Alternative ist als kraftschlüssiges Verbindungsmittel ein Klemmring vorhanden, der über die äußere Polkappe geschoben wird. Der Klemmring kann über ein Sicherungsmittel, insbesondere einen Sicherungsring fixiert werden. Im Fall der Ausführungsform des kraftschlüssigen Verbindungsmittels als Klemmring wird die äußere Polkappe im Bereich ihrer spannzangenartigen Ausformung leicht konisch ausgeführt. Löcher für Senkkopfschrauben der ersten Variante radial angeordneter kraftschlüssiger Verbindungsmittel in der äußeren Polkappe und im Wickel sowie entsprechende Gewindelöcher in der inneren Polkappe können entfallen. Die Pressung durch den Klemmring sorgt für eine ausreichende Kontaktierung und einen vernachlässigbaren Innenwiderstand.

Aus dem Vorstehenden ergibt sich, dass die innere Polkappe mindestens teilweise einen Bestandteil des Wickelkerns bildet und randabschnittsseitige Enden des Wickelpakets aufnimmt.

Die äußeren Polkappen weisen im Bereich ihrer Durchgangsöffnung ein Innengewinde zur Aufnahme eines hohlzylindrischen Zellenreihenschaltungs-Verbindungsstücks oder zum Fixieren eines elektrischen End- oder Zwischenabgriffs auf.

Erfindungsgemäß besteht das Wickelpaket aus einer Kupfer- und einer Aluminiumstreifenfolie, wobei diese Folienstreifen unter Freilassen eines in Längsrichtung verlaufenden Randbereichs mit einer Schicht aus Lithium und leitfähigen Partikeln, z.B. Leitruß, versehen sind.

Im freien Randbereich sind Durchbrüche oder Löcher vorgesehen, welche im aufgewickelten Zustand des jeweiligen Streifens übereinanderliegen. Weiterhin sind Vlieslagen zur Elektrolytaufnahme zwischen den Streifenfolien eingebracht und es sind leitfähige Einlegestreifen ausgebildet, die sich im freien Randbereich innerhalb des Wickels befinden. Die Einlegestreifen weisen ebenfalls Durchbrüche oder Löcher auf, deren Lage zu den Durchbrüchen oder Löchern der Streifenfolien kongruent ist.

Durch die vorstehenden Maßnahmen ergibt sich eine großflächige Kontaktierung der Streifenfolie mit Hilfe der leitfähigen Einlegestreifen unter Nutzung der kraftschlüssigen Verbindungsmittel.

Über schlitzförmige Ausnehmungen im Randbereich der Streifenfolien und der leitfähigen Einlegestreifen besteht die Möglichkeit der Zuführung von Elektrolytflüssigkeit oder einer Elektrolytumwälzung, wobei die schlitzförmigen Ausnehmungen so ausgestaltet sind, dass diese im Fertigwickel ebenfalls übereinanderliegen.

Eine Vereinfachung des Wickelaufbaus in erfindungsgemäßer Weise lässt sich wie nachstehend erläutert realisieren. Wie vorstehend dargelegt, besteht der Wickel aus sechs verschiedenen Komponenten, nämlich einer beschichteten Kupferfolie, einer beschichteten Aluminiumfolie, je einem Einlegestreifen beider Metalle sowie zwei Vlieslagen. Die Einlegestreifen, welche die Aufgabe besitzen, Zwischenräume zwischen den einzelnen Lagen der jeweiligen beschichteten Metallfolie aufzufüllen und so den Stromtransport nach außen mit geringem elektrischen Widerstand zu gewährleisten, können entfallen, wenn diesbezüglich die vorerwähnten Metallfolien eine Stufung, insbesondere stufenförmige Walzung aufweisen. Die Höhe der Stufung ist derart bemessen, dass der ursprüngliche Zwischenraum, sich ergebend aus der Dicke oder Höhe der komplementären Metallfolie sowie der dazwischen liegenden Vliesschichten, ausgefüllt wird. Hierdurch lässt sich der Stromtransport nach außen in gewünschter Weise realisieren und es besteht der Wickelverbund nur aus vier verschiedenen Komponenten.

Die Erfindung stellt, an dieser Stelle zusammenfassend, eine verbesserte Bauform von gewickelten Lithiumzellen dar, wobei durch die vorgestellten erfindungsgemäßen Polkappen eine umfassende Verbesserung gegenüber dem Stand der Technik geschaffen wurde. Die derartig ausgebildeten Zellen sind in besonderem Maße hochstromfähig, wobei die Kopplung mehrerer Zellen über eine einfache Verbinderanordnung möglich ist, die selbst kein wesentliches zusätzliches Volumen beanspruchen. Ebenfalls kann in einfacher Weise eine Temperierung der einzelnen sowie auch eine Kühlung in Serie geschalteter Zellen über eine nichtleitende Flüssigkeit durch die Polkappen hindurch erfolgen. Bei Verwendung eines wässrigen Elektrolyten kann dieser zur Verlängerung der Lebensdauer der Zellen ohne Demontage derselben ausgetauscht werden. Nach Ablauf ihrer Grenznutzungsdauer können die Zellen in einfacher Weise demontiert werden, um eine unkomplizierte Wiederverwendung der diesbezüglichen Rohstoffe zu ermöglichen.

Erfindungsgemäß ist darüber hinaus ein spezielles Sicherungselement für die Reihenschaltung der vorgestellten Lithiumsekundärzellenanordnung. Die hohe Energiedichte von Lithiumsekundärzellen prädestiniert diese für eine Anwendung im Bereich der Elektromobilität. Um die entsprechenden notwendigen Spannungen zu erhalten, wird eine Anzahl von Lithiumsekundärzellen in Reihe geschaltet. Bei einer starken mechanischen Krafteinwirkung, wie sie z.B. bei einem Unfall eines Fahrzeugs auftreten kann, können unabhängig vom eingesetzten Batterietyp Kurzschlüsse entstehen, die die in den Zellen gespeicherte Energie unkontrolliert freisetzen. Durch die Reihenschaltung der Zellen sind zumeist mehrere der Zellen von der unerwünschten und unkontrollierten Entladung betroffen. Mit dem nachstehend erläuterten Sicherungselement kann im Fall eines Kurzschlusses die unkontrollierte Entladung auf möglichst eine Zelle begrenzt und im optimalsten Fall vollständig unterbunden werden.

Das erfindungsgemäße Sicherungselement geht zurück auf die Bauweise der Zellen wie vorstehend erläutert. Hierbei weisen die Zellen axial herausgeführte Anschlusspole mit Außengewinde auf, die optional eine mittige, axiale Durchführung zur Kernkühlung besitzen. Speziell im Fall von Lithiumzellen stellt sich das Problem, dass bei einer Reihenschaltung aufeinander folgender Zellen zwangsweise ein Übergang zwischen einer Kupfer- und einer Aluminiumelektrode herzustellen ist. Eine direkte Kontaktierung dieser Metalle kann bei eindringender Feuchtigkeit leicht elektrolytische Effekte nach sich ziehen, die zu einer Zerstörung der Kontakte führen. Auch diese Problematik wird durch das erläuterte Sicherungselement verhindert.

Das vorgestellte Sicherungselement umfasst zwei metallische Scheiben, nämlich eine Kupfer- sowie eine Aluminiumscheibe, die in Größe und ihren Abmessungen an die zu verbindenden Zellen angepasst sind.

Bevorzugt mittig besitzen beide Scheiben eine Durchführung mit Innengewinde, das mit axialen Anschlusspolen mit Außengewinde der zu verbindenden Zellen korrespondiert.

Beide Scheiben liegen sich konzentrisch, d.h. mit fluchtenden Durchführungen gegenüber und sind mit Hilfe eines elektrisch nichtleitenden elastischen Materials mechanisch verbunden. Die diesbezüglich zum Einsatz kommende elastische Scheibe besitzt ebenfalls eine zentrale Durchführung, um die vorerwähnte Kernkühlung der angeschlossenen Zellen zu gestatten. Der Außendurchmesser der elastischen Scheibe ist geringer als der Durchmesser der vorerwähnten metallischen Scheiben.

Im freien Bereich der metallischen Scheiben, d.h. dem Bereich, der außerhalb der elastischen Scheibe liegt, ist umfangsseitig eine Reihe von Durchführungen vorhanden, die jeweils ebenfalls konzentrisch sind, d.h. zueinander fluchten. In die fluchtenden Durchführungen werden erfindungsgemäß Sicherungsstifte eingesetzt und fixiert. Die Sicherungsstifte bestehen aus einem Verbund, zusammengesetzt aus einem Kupferabschnitt und einem Aluminiumabschnitt. Die entsprechenden Verbundmaterialien sind aneinander fixiert. Der Durchmesser der Sicherungsstifte ist so bemessen, dass sich diese in die vorerwähnten Durchführungen einsetzen bzw. einschieben lassen.

Mittig können die Sicherungsstifte eine Einschnürung zur Bildung einer Stromengstelle besitzen, um die gewünschten Auslöseeigenschaften zu erreichen und das erforderliche Schmelzintegral bereitzustellen.

Der Auslösestrom eines Sicherungsstifts lässt sich durch die Stromengstelle vorgeben. Weiterhin kann der Auslösestrom für das gesamte Sicherungselement über die Anzahl der eingesetzten Sicherungsstifte variabel gestaltet werden. Die Anzahl der Durchführungen in den Scheiben kann ebenfalls dem jeweiligen Einsatzzweck entsprechend angepasst werden. Somit ist es möglich, Sicherungsstifte mit bestimmten, abgestuften Auslöseströmen bereitzustellen, deren Kombination dann den gewünschten Gesamtauslösestrom ergibt.

Das erfindungsgemäße Sicherungselement ermöglicht demnach eine korrosionsfreie Verbindung der axialen Anschlusspole zweier in Serie geschalteter Lithiumzellen. Der Auslösestrom kann durch die Anzahl der eingesetzten Sicherungsstifte stufig und durch die Auswahl der individuellen Sicherungsstifte sehr fein vorgegeben werden. Dabei wird eine durchgängige Kernkühlung der miteinander verbundenen Lithiumzellen weiterhin gewährleistet. Größe und Form des Sicherungselements lassen sich an die zu verbindenden Zellen individuell anpassen. Eine beispielsweise sechseckige Form kann die Montage vereinfachen. Ein ausgelöstes Sicherungselement lässt sich durch das Einsetzen neuer Sicherungsstifte erneut verwenden. Wird der Durchmesser der Scheiben größer als der Durchmesser der zu verbindenden Zellen gewählt, ist ein Austausch der Sicherungsstifte ohne Ausbau des Sicherungselements möglich. Durch den direkten Einbau des Sicherungselements unmittelbar zwischen die zu verbindenden Zellen entfällt im Vergleich zu externen Sicherungen der wegen der erforderlichen Drahtquerschnitte erhebliche Verdrahtungsaufwand. Es ergeben sich hierdurch auch weniger Kontaktstellen, die unnötige Übergangswiderstände hervorrufen können. Weiterhin besteht nur ein geringer Platzbedarf. Es ist auf diesem Wege möglich, innerhalb eines durchgehenden Zellstrangs einzelne Zellen abzusichern.

Die Erfindung soll nachstehend anhand eines Ausführungsbeispiels sowie unter Zuhilfenahme von Figuren näher erläutert werden.

Hierbei zeigen:
- Fig. 1: eine Prinzipdarstellung eines folienartigen, teilbeschichteten Streifens für die spätere Ausbildung des Wickelpakets;
- Fig. 2: eine Prinzipdarstellung der leitfähigen Einlegestreifen;
- Fig. 3: eine perspektivische Darstellung der Wickelanordnung;
- Fig. 4: eine Teilschnittdarstellung eines endseitigen Abschnitts der Zellenanordnung mit Wickeldorn oder Wickelkern und noch nicht im Wickelkern eingesetzter innerer Polkappe;
- Fig. 5: eine Schnittdarstellung der äußeren Polkappe sowie eines noch nicht in eine entsprechende Ausnehmung der äußeren Polkappe eingesetzten Verbinders sowie eine Querschnittsdarstellung des zum Wickelpaket weisenden Endes der äußeren Polkappe, ausgebildet als Spannkopf oder Spannring gemäß erster Ausführungsform;
- Fig. 6: eine Schnittdarstellung des kupferseitigen Endes der Lithiumsekundärzellenanordnung mit erkennbarer innerer und äußerer Polkappe sowie Verbinder, wobei die Schrauben zur Ausbildung der kraftschlüssigen Verbindung zum Fixieren und Kontaktieren des Wickelpakets noch nicht eingebracht sind;
- Fig. 7: einen Querschnitt durch den Folienwickel mit Kunststoffrohr-Außengehäuse, Aussparung für ein Elektrolytventil sowie erkennbaren schlitzförmigen Bereichen zur gleichmäßigen Durchdringung und zum effektiven Einbringen eines flüssigen Elektrolyten in den Wickel und damit in die Zellenanordnung;
- Fig. 8: eine Schnittdarstellung der äußeren Polkappe gemäß einer zweiten Ausführungsform der Erfindung mit im Bereich der spannzangenartigen Ausformung konischen Ausbildung und einem Klemmring als kraftschlüssiges Verbindungsmittel und
- Fig. 9: eine perspektivische Darstellung des erfindungsgemäßen Sicherungselements für die Reihenschaltung mehrerer axialer Lithiumsekundärzellen.

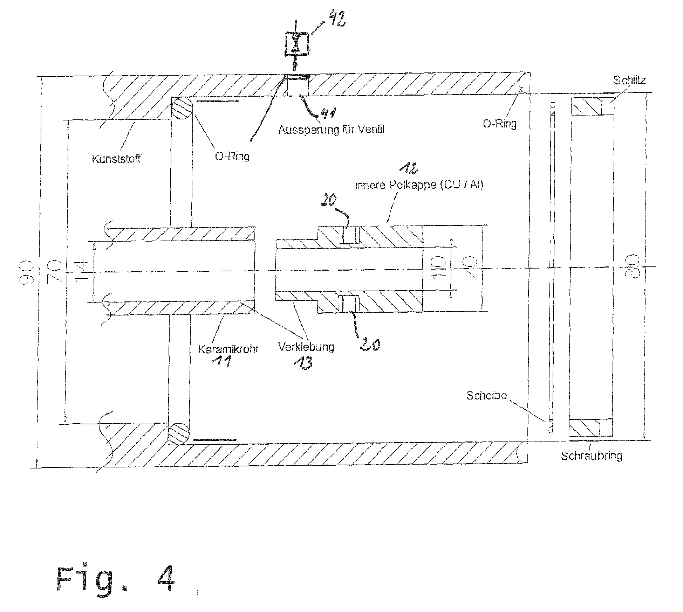

Das Wickelpaket der Lithiumsekundärzellenanordnung besteht aus Kupfer- und Aluminiumstreifenfolien, die, wie in der Fig. 4 gezeigt, ausgebildet sind.

Hierbei wird nur der untere Teil 2 der Folie 1 beidseitig mit Lithium und Leitruß 3 beschichtet. Ein in Längsrichtung verlaufender Randstreifen 4 bleibt beschichtungsfrei. Im freien Randbereich befindet sich eine Reihenanordnung von Löchern 5 sowie eine Reihenanordnung von schlitzförmigen Durchbrüchen 6.

Die Löcher und Schlitze können durch Einstanzen ausgebildet werden, wobei dieser Stanzvorgang vor der Beschichtung des unteren Teils erfolgt, was die technologische Handhabung vereinfacht.

Der Abstand der Löcher 5 und der Schlitze 6 ist so gewählt, dass im fertigen Folienwickel beispielsweise sechs radial durchgängige Löcher und dazu versetzt ebenso viele Schlitze entstehen.

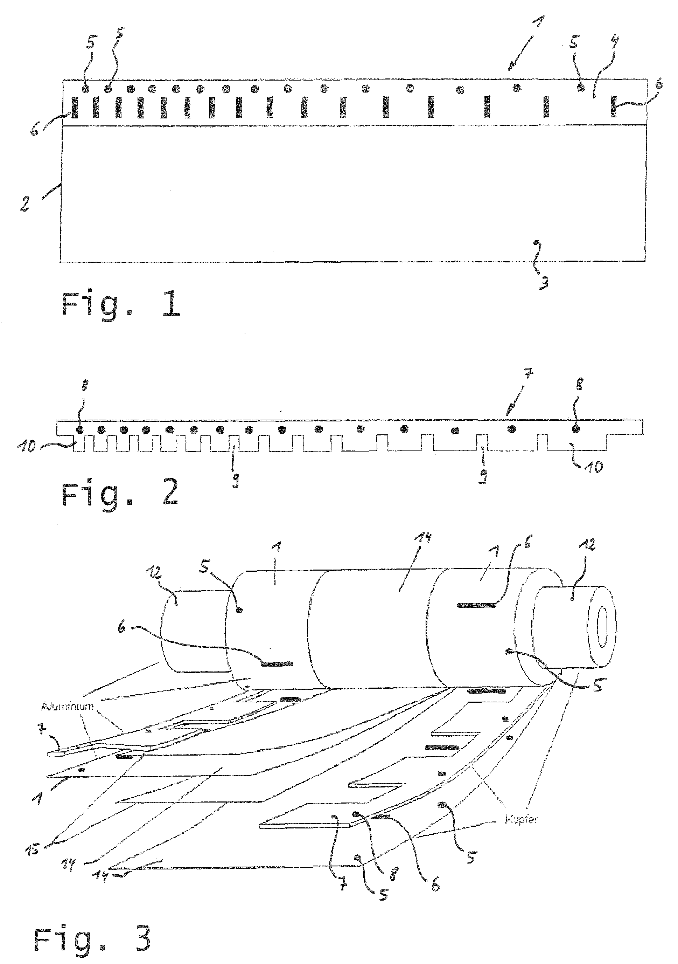

Da der Durchmesser des Wickels mit jeder Lage zunimmt, erhöhen sich von innen nach außen (in der Fig. 1 von links nach rechts) die Abstände der Löcher 5 bzw. der Schlitze 6. Anhand der jeweiligen Foliendicken lässt sich der einzuhaltende Abstand leicht dimensionieren und technologisch realisieren.

Das Wickelpaket umfasst darüber hinaus Einlegestreifen 7, wie in der Fig. 2 gezeigt. Die Einlegestreifen sind aus einem leitfähigen Material bestehend und weisen ebenfalls eine Reihe von Löchern 8 auf. Die Einlegestreifen 7 füllen den Raum zwischen zwei Lagen jeweils einer der beschichteten Folien aus, wobei die entsprechende Materialdicke zu beachten ist.

Die Löcher 8 der Einlegestreifen 7 werden mit den entsprechenden Löchern in der Folie zur Deckung gebracht. Anstelle der Schlitze 6 der Folien besitzen die Einlegestreifen 7 Aussparungen 9, die mit den Schlitzen 6 im Wickel zur Deckung gebracht werden. Die durch die Aussparungen entstehenden, in der Fig. 2 nach unten ragenden Zungen 10 der Einlegestreifen 7 füllen bei benachbarten Folienlagen den Raum zwischen den Schlitzen aus und bilden quasi einen Abstandshalter.

Der Aufbau des Folienwickels soll anhand der Fig. 3 erläutert werden.

Der Wickel besitzt einen Kern, bevorzugt ausgeführt als ein Rohr 11 (siehe Fig. 4) aus einem keramischen Material, dessen Ende die inneren Polkappen 12 aufnimmt. Die inneren Polkappen können durch Stoffschluss insbesondere durch eine Verklebung 13 mit dem Wickelrohr 11 verbunden werden (siehe Fig. 4).

Die Folien 14 werden, wie in der Fig. 3 gezeigt, so aufeinander gelegt, dass die Randstreifen auf verschiedenen Seiten liegen. Die beschichteten Flächen 3 liegen übereinander und werden von einer dazwischen befindlichen Vliesschicht 15 getrennt. Auf die obere Folie wird dann eine weitere Vliesschicht gelegt. Es ergibt sich dadurch im Wickel die wiederkehrende Abfolge einer Kupferfolie, Vlies, Aluminiumfolie, Vlies, Kupferfolie, Vlies, Aluminiumfolie, Vlies, und so weiter.

Auf beiden Seiten wird der Einlegestreifen 7 angeordnet, wobei die Dicke des Einlegestreifens der Gesamtdicke der beschichteten Aluminiumfolie bzw. der beschichteten Kupferfolie und den entsprechenden Vliesschichten entspricht. Die entsprechenden Löcher 5 bzw. Schlitze 6 liegen in der Gesamtanordnung übereinander, was ebenso für die Löcher 8 der Einlegestreifen 7 gilt. In der Fig. 3 sind noch Materialangaben hinsichtlich der leitfähigen Komponenten zur Bildung von Anode und Kathode der Zelle angegeben.

Die Kontaktierung der jeweiligen Seiten des Wickels erfolgt mit Hilfe spezieller Polkappen, wie in den Fig. 4, 5 und 6 dargestellt.

Die innere Polkappe 12 wird dabei über einen verjüngten Abschnitt mit einem entsprechenden Ende des Keramikrohrs 11 bevorzugt durch Verklebung 13 verbunden. Dabei bildet die innere Polkappe einen Teil des Wickels. Darüber hinaus weist die innere Polkappe 12 radiale Bohrungen 20 auf. Diese Bohrungen 20 weisen ein Innengewinde auf. Die Löcher 5 und 8 der Folien bzw. der Einlegestreifen fluchten mit den Bohrungen bzw. Löchern 20 in der inneren Polkappe 12.

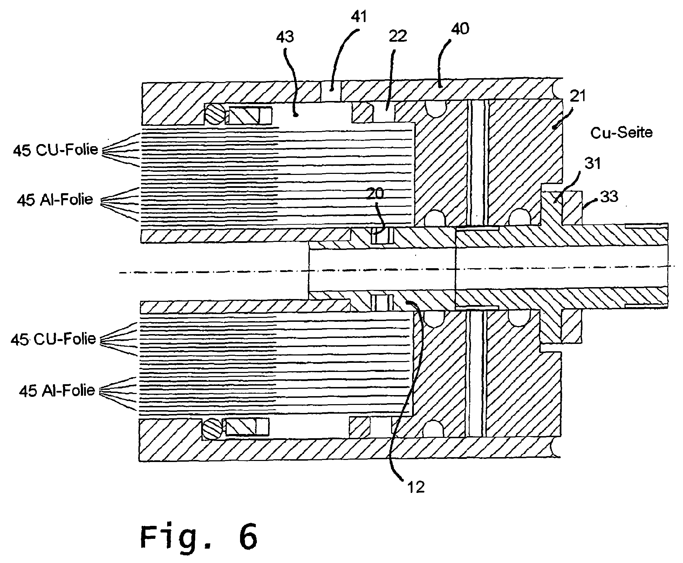

Auf den fertigen Wickel werden auf beiden Seiten dann äußere Polkappen 21, gefertigt entweder aus Kupfer oder Aluminium, aufgeschoben. Durch radiale Bohrungen 22 in den äußeren Polkappen 21 sind Schrauben als kraftschlüssige Verbindungsmittel einführbar, die den Wickel durchdringen und bis zu den Bohrungen 20 der inneren Polkappe 12 reichen. Ein kragenartiger Fortsatz 23 der äußeren Polkappe 21 umgreift ein seitliches Ende des Wickels (siehe Fig. 6) und fixiert dieses mit Hilfe von in den Bohrungen 22 eingebrachten Schrauben als kraftschlüssigem Verbindungsmittel.

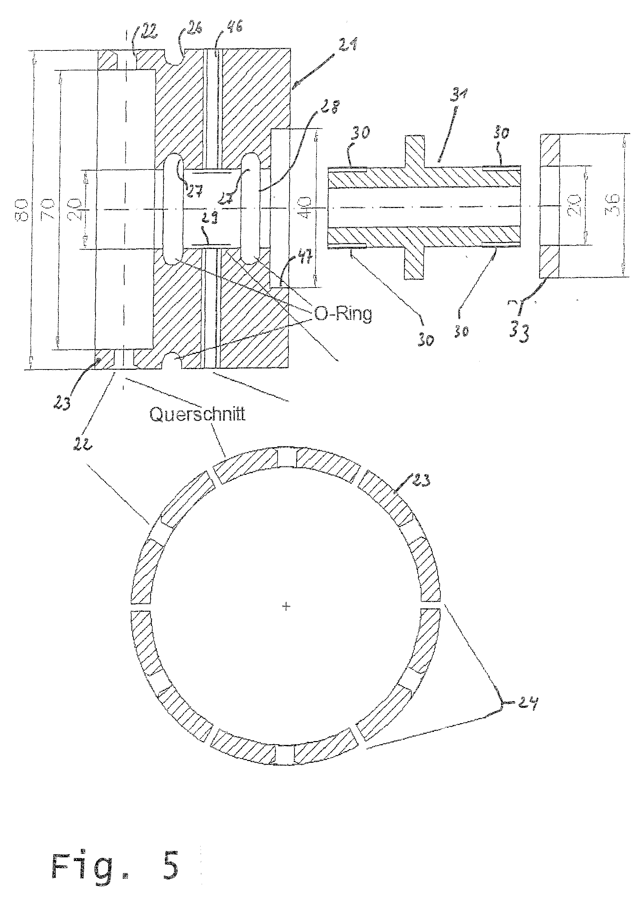

Da die äußere Polkappe im Bereich 23 längsgeschlitzt ist, ergibt sich die Wirkung eines Spannrings oder einer Spannzange. Aufgrund der Tatsache, dass der Zwischenraum zwischen den einzelnen Folienlagen des Wickels durch die erwähnten Einlegestreifen ausgefüllt wird, erfolgt diese kraftschlüssige Verbindung für die Folien ohne wesentliche mechanische Belastung. Gleichzeitig wird eine maximal mögliche Kontaktfläche der gewickelten Folie ausgenutzt und über die Einlegestreifen mit hohem Querschnitt mit der äußeren Polkappe elektrisch verbunden. Die Spannzangenschlitze werden in der Fig. 5 mit dem Bezugszeichen 24 verdeutlicht. Eine umlaufende Nut 26 in der äußeren Polkappe 21 dient der Aufnahme eines Dichtungsrings. Dem gleichen Zweck dienen die Nuten 27 in einem Innendurchgangsbereich 28 der äußeren Polkappe 21.

In dem Durchgangsbereich 28 ist darüber hinaus noch ein Innengewinde 29 vorhanden, das mit einem Außengewinde 30 eines Verbindungsstücks 31 komplementär ist. Das Verbindungsstück 31 ist elektrisch leitfähig und besteht z.B. aus einem Edelstahlmaterial wie V2A.

Das Verbindungsstück 31 kann noch eine Kragung 32 besitzen, welche einen Anschlag für einen Distanzring 33 bildet. Bei der Ausführungsform gemäß Fig. 5 weist das Verbindungsstück 31 auf beiden Seiten Außengewindeabschnitte 30 auf. Hierdurch kann eine geometrische Reihenschaltung mehrerer Lithiumsekundärzellenanordnungen vorgenommen werden, um über den sich dann ausbildenden Längskanal ein Kühlliquid in Gas- oder flüssiger Form zu leiten.

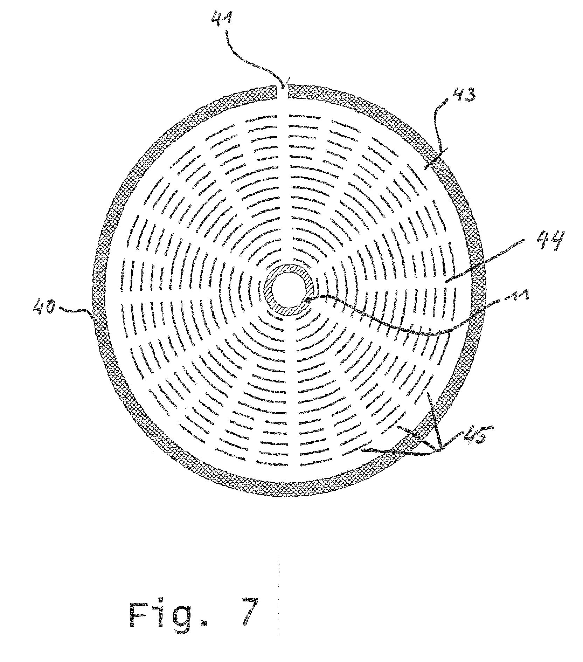

Das Außengehäuse der Gesamtanordnung besteht, wie in der Fig. 6 und 7 ersichtlich, aus einem Kunststoffrohr 40 in entsprechender hohlzylindrischer Gestalt. Durch entsprechende Dichtringe, die mittels Scheibe und Schraubring gesichert werden, werden die Endbereiche des rohrförmigen Außengehäuses 40 abgedichtet, um beim Austausch eines wässrigen Elektrolyten einen hydraulischen Kurzschluss zu verhindern. Im Bereich über den vorhandenen Schlitzen in der gewickelten Folie besitzt das Außengehäuse 40 eine Aussparung 41 für ein Ventil 42. Das Ventil 42 kann als Schutz gegen einen möglicherweise sich ausbildenden Überdruck dienen oder aber bei wässrigem Elektrolyten eine Befüllung bzw. einen Austausch des Elektrolyten ermöglichen. Die Ventile werden von außen in das Gehäuse 40 eingeschraubt und sind mit einem Dichtring abgedichtet. Direkt unterhalb der Aussparung 41 befindet sich ein umlaufender freier Raum (siehe auch Fig. 6 und 7). Dieser umlaufende freie Raum 43 dient der gleichmäßigen Verteilung des Elektrolyten über alle Schlitze 44 der Folienwickel 45 (siehe insbesondere Fig. 7).

Die in der Fig. 5 gezeigte äußere Polkappe 21 dient sowohl dem Spannen als auch dem Kontaktieren des entsprechenden Folienwickels 45. Die äußere Polkappe 21 wird über einen Dichtring gegenüber dem umgebenden Kunststoffrohr abgedichtet (siehe Fig. 6).

Die erkennbare axiale Durchführung ermöglicht nicht nur das Durchleiten von Kühlmittel, sondern auch eine Verschraubung mit dem Verbindungsstück 31.

Weitere O-Ringe innerhalb der Durchführung bilden Abdichtungen gegenüber der inneren Polkappe 12 sowie dem Verbindungsstück 31. Ergänzende radiale Gewindebohrungen 46 in der äußeren Polkappe 21 dienen der Aufnahme von Madenschrauben, die innen das Gewinde der Verbindungsstücke 31 fixieren und eine Verdrehung gegenüber dem Außengehäuse 40 bzw. dem diesbezüglichen Kunststoffrohr verhindern. In diesem Fall ist die Länge der Schrauben so bemessen, dass diese leicht über die äußere Polkappe 21 hinausragen. Zum Einbringen der vorerwähnten Schrauben sind Löcher im Außengehäuse 40 vorhanden, die nach der Montage mit einer Dichtmasse verschlossen werden.

Das Verbindungsstück 31 besteht, wie dargelegt, beispielsweise aus einem Edelstahlmaterial. Der umlaufende Kragen 32 des Verbindungsstücks 31 passt in eine Aussparung 47 der äußeren Polkappe 21, so dass eine bündige Fläche entsteht. Hier kann wahlweise eine großflächige Kontaktierung erfolgen oder es wird das Verbindungsstück 31 über den aufgelegten Distanzring 33 mit einer äußeren Polkappe einer weiteren Zelle verschraubt, so dass die erwähnten Reihenschaltungen realisierbar sind. Ein entsprechender O-Ring ermöglicht ein Abdichten der sich dann gegenüberliegenden Kunststoffrohre der Reihenschaltung. Das leitfähige Verbindungsstück 31 ist sowohl für die Verbindung von Zellen als auch als Endabschnitt einer Reihenschaltung von Zellen verwendbar.

Die Fig. 6 lässt als Schnittdarstellung das Ergebnis der montierten Zelle erkennen. Gezeigt ist die Ansicht der Kupferseite der Zelle.

Zur Herstellung der Zelle ist zunächst einen Kupfer- und einen Aluminiumstreifen der gewünschten Länge und Breite anzufertigen und mit den erforderlichen Löchern und Schlitzen zu versehen. Anschließend können die Streifen entsprechend beschichtet werden. Ebenso werden passende Vliesstücke und Einlegestreifen bereitgestellt.

Das Keramikrohr als Wickelkern wird mit den beiden inneren Polkappen verklebt. Die inneren wie auch die äußeren Polkappen lassen sich als einfache Drehteile herstellen.

Die beschichteten Metallfolien werden zusammen mit den Vliesschichten und Einlegestreifen auf das Rohr gewickelt, so dass sich Löcher und Bohrungen auf beiden Seiten jeweils durchgängig ergeben. Der so gebildete Wickel wird dann in das Außengehäuse geschoben.

Über den Wickel werden O-Ringe als Dichtringe angeordnet, die entsprechenden Scheiben aufgelegt und Schraubringe eingeschraubt.

Im Schraubring eingebrachte Nuten oder Schlitze können diesbezüglich eine Montagehilfe bilden.

Anschließend werden die notwendigen Ventile in das Außengehäuse bzw. Kunststoffrohr eingesetzt und die äußeren Polkappen aufgeschoben. Durch die entsprechenden Löcher lassen sich Senkkopfschrauben bis zu den inneren Polkappen einbringen und mit diesen verschrauben. Es erfolgt dann das Anordnen der Verbindungsstücke und Fixieren dieser. Wenn es notwendig ist, einen Elektrolyten in wässriger Form einzubringen, kann dies durch die vorgesehenen Ventile erfolgen.

Die beschichteten Folien, welche elektrische Energie aufnehmen, erhalten diese jeweils von einer Seite und geben die elektrische Energie auch nur dorthin ab. Die Länge der Seiten, über die die Folien aufgewickelt sind, liegt typischerweise im Meterbereich, so dass auch bei dünnen Folien ein hoher Gesamtquerschnitt entsteht. Entscheidend bei der vorgestellten Konstruktion ist die vollständige Ausnutzung dieses maximal zur Verfügung stehenden Querschnitts für den Stromtransport. Durch die Einlegestreifen werden die Folien entlang der gesamten Seite flächig kontaktiert, ohne dass es zu einer nennenswerten mechanischen Beanspruchung des empfindlichen, dünnen Materials der Folien kommt.

Kontaktierungsprobleme wie beim Stand der Technik sind ausgeschlossen. Die Zungen der Einlegestreifen reichen bis kurz vor den beschichteten Bereich der Folienstreifen und reduzieren so den Innenwiderstand der Folienstreifen.

Die Verbindung zur äußeren Polkappe erfolgt auf dem gesamten Umfang des Folienwickels mit der Breite des Einlegestreifens und ist damit ebenfalls großflächig. Die äußeren Polkappen mit den eingeschraubten Verbindungsstücken besitzen eine sehr große, plane Kontaktfläche, auf der ein Übergang zu einem externen Leiter jedweden Durchmessers möglich ist. Es können somit sehr hohe Ströme fließen, ohne dass es im Anschlussbereich zu Verlusten oder einer unerwünschten Erwärmung kommt.

Kühlungsseitig ist es von Vorteil, dass beginnend bei den Verbindungsstücken über die äußeren und inneren Polkappen bis durch das Keramikrohr die Zellen eine axiale Durchführung aufweisen. Die Durchführung ist durch entsprechende Dichtringe vollständig gegen das Innere der Zelle abgedichtet. Es kann somit ein nichtleitendes, aber auch ansonsten beliebiges Kühlmittel in die Zelle geleitet werden und diese von innen her kühlen, was insbesondere bei einem Hochstromladen von Vorteil ist, da gerade in diesem Fall eine große Wärmeenergiemenge im Inneren der Zelle entsteht.

Werden, wie erläutert, mehrere Zellen hinteinander zu einer durchgängigen Einheit verbunden, erhält man aufgrund der besonderen Bauweise eine ebenso durchgängige axiale Durchführung für das Kühlmittel. Es entsteht somit kein höherer Aufwand als bei der Kühlung einer einzelnen Zelle.

Bei einer Lithiumzelle ist der Elektrolyt die am stärksten beanspruchte Komponente. Im Falle des Einsatzes wässriger Elektrolyten kann durch den Austausch die Lebensdauer einer Zelle erhöht werden. Die hier vorgestellte Konstruktion einer Zelle ermöglicht in einfacher Weise den Elektrolytenaustausch. Durch die erwähnten Ventile im Kunststoffrohr, den umlaufenden freien Bereich zwischen den Vliesschichten und den dortigen Zungen des Einlegestreifens sowie Schlitze in den Folien kann von außen zugeführter Elektrolyt den gesamten Querschnitt des Wickels erreichen und das dort befindliche Vlies an jeder Stelle versorgen. Auf der gegenüberliegenden Seite wird entsprechend der vorhandene Elektrolyt abgesaugt. Die Abdichtung zwischen Folienwickel und Kunststoffrohr verhindert, dass der Elektrolyt am Wickel vorbei fließt, es kann damit kein hydraulischer Kurzschluss entstehen.

Bei Zellen mit höherer Leistung, wie sie beispielsweise für große Speicherbatterien erforderlich sind, kann durch eine fortlaufende Elektrolytumwälzung auch eine gewünschte Temperierung der Zellen vorgenommen werden. Hierbei ist eine solche Umwälzung auch mit dem oben erläuterten Verfahren der Kühlung über die axiale Durchführung kombinierbar.

Die Umsetzung des Elektrolyten im laufenden Betrieb stellt besondere Anforderungen an die umgebende Technik. Alle Bauteile außerhalb der Zelle, die an dieser Umwälzung beteiligt sind, müssen aus isolierenden Materialien hergestellt werden.

Wenn hohe Speicherkapazitäten erreicht werden sollen, kann entsprechend die Breite des Wickels, aber auch der Wickeldurchmesser erhöht werden. Es ist also eine diesbezügliche Skalierung möglich.

Da mit zunehmendem Durchmesser die Kühlung durch die axiale Durchführung von Kühlmittel an Wirksamkeit verliert, ist es besonders vorteilhaft, die Kühlung durch Elektrolytumwälzung zu ergänzen, da diese Kühlung den gesamten Wickel durchdringt. Um eine möglichst gleichmäßige Durchdringung zu erreichen, können zusätzlich zu den beschriebenen Schlitzen, die von außen bis ins Zentrum führen, weitere Schlitze gemäß Fig. 7 vorgesehen sein, die von außen nur einen Teil der Strecke bis zum Zentrum umfassen. Fig. 7 zeigt schematisch, wie mit zunehmendem Durchmesser des Wickels weitere Schlitze 44 anzuordnen sind, um eine gleichmäßige Durchdringung des Wickels mit Elektrolyt zu gewährleisten. Ausgehend von den Ventilaussparungen 41 gelangt der Elektrolyt in den umlaufenden freien Bereich 43, der im Verhältnis einen großen Querschnitt mit geringem Strömungswiderstand besitzt. Von dort dringt der Elektrolyt durch die Schlitze in alle Lagen des Wickels und muss durch die Anordnung der Schlitze zwischen den einzelnen Lagen nur geringe Wege zurücklegen. Es wird damit der Weg des Elektrolyten durch die Bereiche mit geringem Querschnitt praktisch nur durch die Breite des Wickels vorgegeben.

Die Verbindungsstücke 31 erlauben unmittelbar eine Reihenschaltung mehrerer Zellen, womit die Gesamtspannung erhöht werden kann. Man erhält dabei einen langgestreckten Zylinder mit dem Durchmesser einer einzelnen Zelle, aber dem Vielfachen ihrer Länge. Um die Kapazität bei gleicher Spannung zu erhöhen, können die Zellen auch parallel geschaltet werden. Dies ist durch ein einfaches Bauteil zu bewirken, wofür hier ein leitfähiger Streifen zum Einsatz kommt, der entsprechende Aussparungen für Verbindungsstücke nebeneinander liegender Zellen umfasst. Die Dicke des Streifens kann geeignet gewählt werden. Ein derartiger Streifen kann auch bei einer Reihenschaltung zweier Zellen Verwendung finden. Beispielsweise lässt sich eine Anordnung von insgesamt vier Zellen, jeweils zwei parallel und zwei in Reihe, durch drei derartige Streifen verschalten, wobei sich eine doppelte Kapazität und eine entsprechend höhere Spannung gegenüber einer einzelnen Zelle ergibt.

In ähnlicher Art können auch Zwischenabgriffe realisiert werden. Bei einer Reihenschaltung können ähnlich wie oben erläutert Kabelschuhe zwischen den Zellen eingelegt werden. Auch lässt sich ein Streifen mit einer entsprechenden lochartigen Ausdehnung einlegen, der außerhalb der Zelle abgewinkelt wird und damit eine Isolierung parallel zum Zylinder der verschraubten Zellen zu einer der Zylinderenden zu führen ist. Mehrere Abgriffe können mit solchen Streifen wahlweise rings um den Zylinder angeordnet werden oder sie werden mit zunehmendem Abstand abgewinkelt. In beiden Fällen erhält man mit geringem Aufwand sämtliche Anschlüsse gebündelt an einem der Enden in Reihe geschalteter Zellen. Diese Abgriffe können analog auch bei parallel geschalteten Zellen genutzt werden.

Die erfindungsgemäße Zelle lässt sich wie oben erläutert ohne spezielle technologische Schritte herstellen. Es erfolgt kein Verschweißen oder ein anderweitiges untrennbares Verbinden. Es lässt sich also die entsprechend aufgebaute Zelle ebenso leicht demontierten. Hierdurch ergeben sich erhebliche Vorteile beim Recycling.

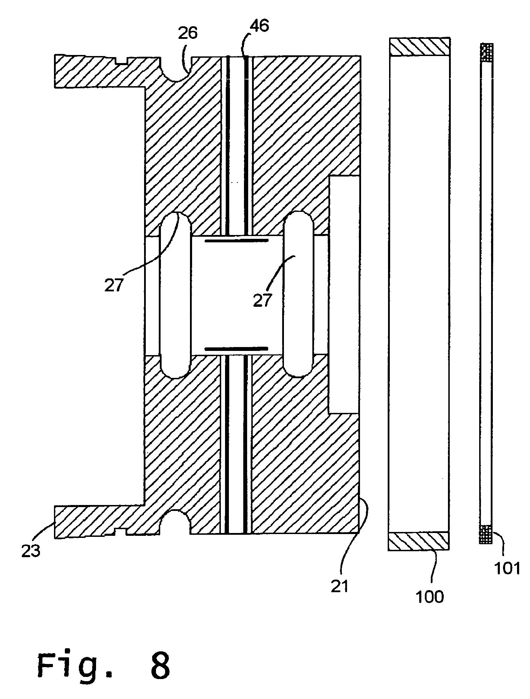

Gemäß der Darstellung nach Fig. 8 lässt sich eine weitere Vereinfachung beim Befestigen der äußeren Polkappe nachvollziehen.

Hinsichtlich der angegebenen Bezugszeichen gemäß Fig. 8 wird auf die Erläuterungen zur Fig. 5 verwiesen. Die Befestigung der äußeren Polkappen am Wickel, der im Inneren das Keramikrohr mit den inneren Polkappen enthält, kann anstelle der Möglichkeit des Fixierens mittels Senkkopfschrauben unter Benutzung der Bohrungen 22 (siehe Fig. 5) auch durch einen Klemmring 100 gemäß Fig. 8 realisiert werden.

Hierfür wird die äußere Polkappe im Bereich der spannzangenartigen Ausformung 23 leicht konisch ausgebildet. Über die äußere Polkappe wird dann der Klemmring 100, z.B. gefertigt aus V4A-Stahl, aufgebracht und mittels eines Sicherungsrings 101, z.B. aus Bronze, der in entsprechende Aussparungen der äußeren Polkappe einrastet, gesichert.

Es wird durch diese Maßnahme auch die Herstellung der Folien bzw. eines Einlegestreifens, sofern dieser verwendet wird, vereinfacht, da die ansonsten dort einzubringenden Löcher vollständig entfallen können.

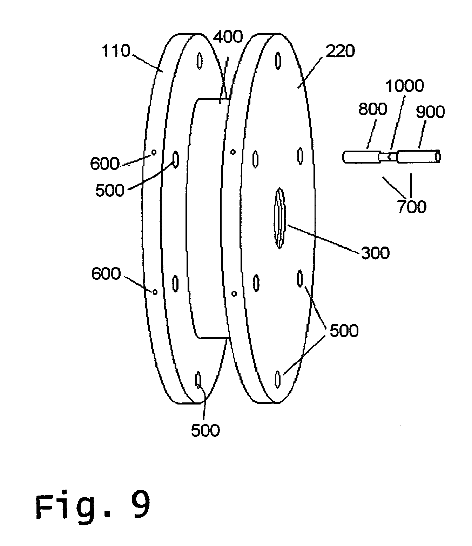

Mit Hilfe der Fig. 9 soll das erfindungsgemäße Sicherungselement für die Reihenschaltung mehrerer Lithiumsekundärzellen näher erläutert werden.

Das Sicherungselement weist gemäß Ausführungsbeispiel nach Fig. 9 eine Kupferscheibe 110 und eine Aluminiumscheibe 220 auf, die in Größe und Form an die zu verbindenden Zellen angepasst sind.

Mittig zwischen den Scheiben 110 und 220 befindet sich eine Durchführung 300 mit Innengewinde, welches mit den axialen Anschlusspolen und dem dortigen Außengewinde der zu verbindenden Zellen korrespondiert.

Beide Scheiben 110 und 220 liegen sich mit fluchtenden Durchführungen gegenüber und sind mittels einer elektrisch nichtleitenden Scheibe, insbesondere Gummischeibe 400 mechanisch verbunden.

Die Gummischeibe 400 besitzt ebenfalls eine zentrale Durchführung, um eine durchgehende Kernkühlung der angeschlossenen Zellen zu gestatten.

Nach außen hin besitzt die Gummischeibe 400 einen geringeren Durchmesser als die Scheiben 110 und 220.

Im umlaufenden Bereich der Scheiben 110 und 220, der außerhalb der Gummischeibe 400 liegt, befindet sich eine Reihe von Durchführungen 500, die jeweils zwischen den beiden Scheiben 110 und 220 fluchten. In diese fluchtenden Durchführungen 500 werden Sicherungsstifte 700 eingesetzt und z.B. mittels Madenschrauben in den Gewindelöchern 600, die radial von den Außenrändern der Scheiben 110 und 220 bis zu den Durchführungen 500 reichen, fixiert.

Die Sicherungsstifte 700 umfassen einen Verbund, zusammengesetzt aus einem Kupferabschnitt 800 und einem Aluminiumabschnitt 900. Die entsprechenden Materialien sind mit Hilfe dem Fachmann geläufiger Verfahren untrennbar verbunden.

Der Durchmesser der Sicherungsstifte 700 ist so bemessen, dass sich diese in die Durchführungen 500 leicht einschieben und einsetzen lassen. Mittig können bei einer bevorzugten Ausgestaltung die Sicherungsstifte 700 eine Einschnürung 1000 aufweisen, um die gewünschten Auslöseeigenschaften zu erreichen.

Die Scheiben 110 und 220 werden auf die jeweiligen axialen Anschlusspole der zu verbindenden Zellen aufgeschraubt, so dass die Scheibe 110 aus Kupfer mit dem Kupferpol der einen und die Aluminiumscheibe 220 mit dem Aluminiumpol der anderen Zelle verbunden wird.

Durch die dazwischen liegende und mit den Scheiben fest verbundene Gummischeibe 400 sind die Zellen mechanisch stabil, aber auch elastisch zueinander in Kontakt stehend.

Die elektrische Verbindung zwischen den Zellen wird ausschließlich über die einzusetzenden Sicherungsstifte 700 hergestellt. Da der Kontakt zwischen den Metallen Kupfer und Aluminium nur über die feste Verbindung innerhalb der Sicherungsstifte 700 erfolgt, kann keinerlei Feuchtigkeit eindringen, wodurch jegliche Korrosion prinzipbedingt ausgeschlossen ist.

Der Auslösestrom eines jeweiligen Sicherungsstifts 700 lässt sich durch die jeweilige Einschnürung 1000 leicht vorgeben. Des Weiteren kann der Auslösestrom für das gesamte Sicherungselement 700 über die Anzahl der eingesetzten Sicherungselemente 700 in Stufen variiert werden. Die Anzahl der Durchführungen 500 kann diesbezüglich dem entsprechenden Einsatzzweck und dem Stromfluss angepasst werden.

## Patentansprüche

1. Lithiumsekundärzellenanordnung in zylindrischer Bauform mit einem Wickeldorn und einem Wickelpaket, welches folienartige, beschichtete Streifen sowie Kontaktierungsstreifen, die die elektrische Zellenstruktur aus Anode, Kathode und Separator bilden, aufweist, und mit äußeren elektrischen Anschlussmitteln, diese umfassend Polkappen, wobei
der Wickeldorn aus einem isolierenden Material besteht und einen sich in Längsachsenrichtung erstreckenden Durchgangskanal aufweist,
der Wickeldorn endseitig mit je einer inneren Polkappe in Verbindung steht, welche ebenfalls jeweils einen Durchgangskanal besitzen,
weiterhin jeweils eine äußere Polkappe mit Durchgangsöffnung vorgesehen ist, welche das Wickelpaket mindestens im Randbereich umfangsseitig umgreift,
**dadurch gekennzeichnet, dass**
über mehrere, radial angeordnete kraftschlüssige Verbindungsmittel, welche jeweils zwischen der äußeren und der inneren Polkappe wirken, das Wickelpaket fixiert und eine elektrische Kontaktierung zwischen den Kontaktierungsstreifen und der äußeren Polkappe realisiert wird, wobei das Wickelpaket aus einer Kupfer- und einer Aluminiumstreifenfolie besteht, wobei diese Folienstreifen unter Freilassen eines in Längsrichtung verlaufenden Randbereichs mit einer Schicht aus Lithium und leitfähigen Partikeln versehen sind, wobei im freien Randbereich Durchbrüche oder Löcher vorgesehen sind, welche im aufgewickelten Zustand des jeweiligen Streifens übereinander liegen, weiterhin Vlieslagen zur Elektrolytaufnahme zwischen den Streifenfolien eingebracht sowie leitfähige Einlegestreifen als Kontaktierungsstreifen ausgebildet sind, die sich im freien Randbereich innerhalb des Wickels befinden, wobei die Einlegestreifen ebenfalls Durchbrüche oder Löcher aufweisen, deren Lage zu den Durchbrüchen oder Löchern der Streifenfolien kongruent ist.

2. Lithiumsekundärzellenanordnung nach Anspruch 1,
**dadurch gekennzeichnet, dass**
über die mechanische Reihenschaltung der Durchgangskanäle und der Durchgangsöffnungen ein Zellen-Kühlliquid zuführbar ist.

3. Lithiumsekundärzellenanordnung nach Anspruch 1 oder 2,
**dadurch gekennzeichnet, dass**
diese von einem rohrartigen, isolierenden Außengehäuse umgeben ist.

4. Lithiumsekundärzellenanordnung nach einem der vorangegangenen Ansprüche,
**dadurch gekennzeichnet, dass**
der Wickeldorn als Hohlzylinder ausgebildet ist, dessen Enden einen Abschnitt der jeweiligen inneren Polkappe aufnehmen.

5. Lithiumsekundärzellenanordnung nach einem der vorangegangenen Ansprüche,
**dadurch gekennzeichnet, dass**
die kraftschlüssigen Verbindungsmittel als Schrauben oder Bolzen ausgeführt sind, welche den Wickel an dort vorgesehenen Ausnehmungen in radialer Richtung durchdringen, wobei die inneren Enden der Schrauben oder Bolzen von einer jeweiligen Gewindebohrung in der jeweiligen inneren Polkappe aufgenommen sind.

6. Lithiumsekundärzellenanordnung nach einem der vorangegangenen Ansprüche,
**dadurch gekennzeichnet, dass**
die innere Polkappe mindestens teilweise einen Bestandteil des Wickelkerns oder Wickeldorns bildet.

7. Lithiumsekundärzellenanordnung nach einem der vorangegangenen Ansprüche,
**dadurch gekennzeichnet, dass**
die äußeren Polkappen im Bereich ihrer Durchgangsöffnung ein Innengewinde zur Aufnahme eines hohlzylindrischen Zellenreihenschaltungs-Verbindungsstücks oder zum Fixieren eines elektrischen End- oder Zwischenabgriffs aufweisen.

8. Lithiumsekundärzellenanordnung nach einem der vorangegangenen Ansprüche,
**dadurch gekennzeichnet, dass**
mittels der leitfähigen Einlegestreifen eine großflächige Kontaktierung der Streifenfolien erfolgt.

9. Lithiumsekundärzellenanordnung nach einem der vorangegangenen Ansprüche,
**dadurch gekennzeichnet, dass**
über schlitzförmige Ausnehmungen im Randbereich der Streifenfolien und der leitfähigen Einlegestreifen eine Elektrolytzuführung oder Elektrolytumwälzung insbesondere zur Temperierung erfolgt, wobei die schlitzförmigen Ausnehmungen so ausgebildet sind, dass diese im Fertigwickel übereinander liegen.

## Claims

1. A lithium secondary cell array in a cylindrical design, comprising a winding mandrel and a winding packet, which comprises foil-like coated strips and contacting strips that form the electric cell structure of anode, cathode and separator, and comprising outer electrical connecting means, these comprising pole caps, wherein the winding mandrel consists of an insulating material and comprises a through-channel extending in the direction of the longitudinal axis, the winding mandrel being connected to one inner pole cap each at the end, which pole caps likewise have a through-channel, furthermore each outer pole cap has a through-passage which surrounds the winding packet circumferentially at least in the edge region, **characterized in that** the winding packet is fixed via several radially arranged, force-fitting connecting means, which each act between the outer and the inner pole cap, and achieve the electrical contacting between the contacting strips and the outer wall, wherein the winding packet consists of a copper and aluminium foil strip, wherein said foil strips are provided with a layer of lithium and conductive particles while leaving free an edge region extending in the longitudinal direction, wherein breakthroughs or holes are provided in the free edge region which lie above each other in the wound-up state of the respective strip, wherein further non-woven layers are introduced between the foil strips to accommodate the electrolyte and conductive insert strips are formed as contacting strips which are located in the free edge region within the winding, wherein the insert strips also comprise breakthroughs or holes whose position is congruent to the breakthroughs or holes of the foil strips.

2. A lithium secondary cell array according to claim 1, **characterized in that** a cell coolant liquid can be fed via the mechanical series connection of the through-channels and the through-passages.

3. A lithium secondary cell array according to claim 1 or 2, **characterized in that** it is surrounded by a tube-like, insulating outer housing.

4. A lithium secondary cell array according to one of the preceding claims,
**characterized in that** the winding mandrel is formed as a hollow cylinder whose ends accommodate a section of the respective inner pole cap.

5. A lithium secondary cell array according to one of the preceding claims,
**characterized in that** the force-fitting connecting means are formed as screws or bolts which penetrate the winding in the radial direction at recesses provided there, wherein the inner ends of the screws or bolts are accommodated by a respective threaded bore in the corresponding inner pole cap.

6. A lithium secondary cell array according to one of the preceding claims,
**characterized in that** the inner pole cap forms at least partly a component of the winding core or winding mandrel.

7. A lithium secondary cell array according to one of the preceding claims,
**characterized in that** the outer pole caps comprise an internal thread in the region of their through-passage to accommodate a hollow-cylindrical connecting piece for a series array of cells or to fix an electrical terminal or intermediate tap.

8. A lithium secondary cell array according to one of the preceding claims,
**characterized in that** large-area contacting of the foil strip is effected by means of the foil strips.

9. A lithium secondary cell array according to one of the preceding claims,
**characterized in that** a supply or circulation of electrolyte, especially for tempering, occurs via slot-shaped recesses in the edge region of the foil strips and the conductive insert strips, wherein the slot-shaped recesses are formed in such a way that they lie on top of each other in the completed winding.

## Revendications

1. Ensemble de cellules secondaires au lithium de forme structurelle cylindrique comportant un mandrin d'enroulement et un paquet d'enroulement qui comprend des rubans revêtus de type feuille ainsi que des rubans de mise en contact qui forment la structure cellulaire électrique constituée de l'anode, de la cathode et du séparateur, et des moyens de connexion électriques extérieurs qui comprennent des capuchons polaires,
dans lequel
le mandrin d'enroulement est constitué en un matériau isolant et présente un canal traversant qui s'étend en direction de l'axe longitudinal,
le mandrin d'enroulement est en liaison du côté extrémité avec un capuchon polaire intérieur respectif qui possède également chacun un canal traversant,
il est en outre prévu un capuchon polaire extérieur respectif avec une ouverture traversante qui entoure le paquet d'enroulement du côté périphérie au moins dans la zone de bord,
**caractérisé en ce que**
le paquet d'enroulement est fixé par plusieurs moyens de liaison agencés radialement en coopération de forces qui agissent chacun entre les capuchons polaires extérieur et intérieur, et une mise en contact électrique est réalisée entre les rubans de mise en contact et le capuchon polaire extérieur, le paquet d'enroulement étant constitué d'une feuille de ruban en cuivre et d'une feuille de ruban en aluminium, ces rubans de feuille étant pourvus d'une couche de lithium et de particules conductrices en épargnant une zone de bord s'étendant en direction longitudinale, des traversées ou des trous étant prévus dans la zone de bord libre qui, dans l'état enroulé du ruban respectif, sont superposés, et des couches de non-tissé sont insérées entre les feuilles de ruban pour recevoir un électrolyte, et des rubans d'insertion conducteurs sont réalisés en tant que rubans de mise en contact qui se trouvent dans la zone de bord libre à l'intérieur de l'enroulement, les rubans d'insertion présentant également des traversées ou des trous dont la position coïncide à celle des traversées ou des trous des feuilles de ruban.

2. Ensemble de cellules secondaires au lithium selon la revendication 1,
**caractérisé en ce que**
la disposition mécanique en série des canaux traversants et des ouvertures traversantes permet d'amener un liquide de refroidissement de cellules.

3. Ensemble de cellules secondaires au lithium selon la revendication 1 ou 2,
**caractérisé en ce que**
celui-ci est entouré par un boîtier extérieur isolant en forme de tube.

4. Ensemble de cellules secondaires au lithium selon l'une des revendications précédentes,
**caractérisé en ce que**
le mandrin d'enroulement est réalisé en tant que cylindre creux dont les extrémités reçoivent une partie du capuchon polaire intérieur respectif.

5. Ensemble de cellules secondaires au lithium selon l'une des revendications précédentes,
**caractérisé en ce que**
les moyens de liaison en coopération de forces sont réalisés sous forme de vis ou de boulons qui traversent l'enroulement en direction radiale dans des évidements qui y sont prévus, les extrémités intérieures des vis ou des boulons étant reçues par un perçage taraudé respectif dans le capuchon polaire intérieur respectif.

6. Ensemble de cellules secondaires au lithium selon l'une des revendications précédentes,
**caractérisé en ce que**
le capuchon polaire intérieur fait au moins partiellement partie du noyau d'enroulement ou du mandrin d'enroulement.

7. Ensemble de cellules secondaires au lithium selon l'une des revendications précédentes,
**caractérisé en ce que**
dans la zone de leur ouverture traversante, les capuchons polaires extérieurs présentent un taraudage pour recevoir un embout de liaison cylindrique creux pour le montage en série des cellules ou pour fixer une prise électrique d'extrémité ou intermédiaire.

8. Ensemble de cellules secondaires au lithium selon l'une des revendications précédentes,
**caractérisé en ce que**
une mise en contact à grande surface des feuilles de ruban est réalisée au moyen des rubans d'insertion conducteurs.

9. Ensemble de cellules secondaires au lithium selon l'une des revendications précédentes,
**caractérisé en ce que**
une amenée d'électrolyte ou une circulation d'électrolyte destinée en particulier à la températion se fait par des évidements en forme de fente dans la zone de bord des feuilles de ruban et des rubans d'insertion conducteurs, les évidements en forme de fente étant réalisés de manière à se trouver les uns au-dessus des autres dans l'état fini de l'enroulement.
